(19) Europäisches Patentamt
European Patent Office
Office européen des brevets

(11) Publication number: 0 259 124 A2

(12) # EUROPEAN PATENT APPLICATION

(21) Application number: 87307664.0

(22) Date of filing: 28.08.87

(51) Int. Cl.[4]: C 08 F 4/64
C 08 F 10/00

(30) Priority: 01.09.86 JP 203635/86
10.09.86 JP 211467/86

(43) Date of publication of application:
09.03.88 Bulletin 88/10

(84) Designated Contracting States:
AT DE FR GB IT NL

(71) Applicant: MITSUI PETROCHEMICAL INDUSTRIES, LTD.
2-5, Kasumigaseki 3-chome Chiyoda-ku
Tokyo 100 (JP)

(72) Inventor: Kioka, Mamoru
2-3, Muronoki-cho 1-chome
Iwakuni-shi Yamaguchi-ken (JP)

Kashiwa, Norio
2-9, Muronoki-cho 1-chome
Iwakuni-shi Yamaguchi-ken (JP)

(74) Representative: Myerscough, Philip Boyd et al
J.A.Kemp & Co. 14, South Square Gray's Inn
London, WC1R 5EU (GB)

(54) **Method of polymerizing alpha olefins.**

(57) A method of polymerizing alpha-olefins, which comprises polymerizing or copolymerizing at least one alpha-olefin in the presence of a catalyst formed from

(A) a titanium-containing component at least containing magnesium, titanium and halogen, said component being obtained by co-pulverizing a mixture at least comprising (a) a magnesium compound, (b) a titanium compound and (c) at least 150 parts by weight, per 100 parts by weight of the magnesium compound (a), of an organic halogen compound, and optinoally contacting the resulting solid component with (d) a halogen-containing organoaluminum compound, and

(B) an organoaluminum compound component.

EP 0 259 124 A2

**Description**

METHOD OF POLYMERIZING ALPHA-OLEFINS

This invention relats to a method of polymerizing or copolymerizing alpha-olefins by which polyolefins can be produced with very high polymerization activity.

Polyolefin powders such as polyethylene and polypropylene powders have previously been used in the field of powder molding such as compression molding, powder molding and fluidized dipping, the field of producing polyolefin compositions containing inorganic fillers, and the field of additives such as mold releasing agents, antiblocking agents and modifies for resins. In any of these fields, polyolefin powders are required to have uniform dispersibility.

Methods known heretofore to produce polyolefin powders used in applications include, for example, a method in which pellets of a polyolefin obtained by polymerization are mechanically pulverized, a method which comprises adding a solution or melt of a polyolefin obtained by polymerization to a difficultly soluble medium kept at a high temperature, dispersing it with stirring under high shear, cooling the mixture to obtain a polyolefin powder, and a method in which a polyolefin powder is directly obtained from the polymerization reaction system.

The polyolefin powder obtained by the first-mentioned mechanical pulverizing method has the defect that the powder is not spherical and has a large average particle diameter; in powder molding, a uniform molded surface is difficult to obtain from it; and that the high-density fillability and uniform dispersibility of inorganic fillers in this polyolefin powder are poor.

In the second dissolving-dispersion method, the individual particles of the polyolefin powder are spherical, but the particles are agglomerated in the cooling step during production to form coase particles having a low bulk density. In powder molding, the product tends to be porous with insufficient strength. In the production of a composition containing an inorganic filler, the high-density fillability and uniform dispersibility of an inorganic filler in the resulting polyolefin particle are poor as in the case of the mechanically pulverized powder.

According to the method of producing the polyolefin powder directly by the polymerization of an olefin, the resulting polyolefin powder generally has a large average particle diameter. Even when its average particle diameter is small, its particle size distribution and bulk density are difficult to control.

It has been difficult therefore to obtain spherical fine particles of a polyolefin which can exhibit sufficient performance in any of the field of powder molding, the field of production of inorgnaic filler-filled compositions, and the field of additives such as mold releasing agents, antiblocking agents and modifiers for resins.

Much prior literature has disclosed a method of producing a polyolefin by polymerizing an olefin in the presence of a titanium-containing Ziegler catalyst formed from a titanium-containing solid catalyst component obtained by co-pulverizing a magnesium compound, a titanium compound and an organic halogen compound and an organoaluminum compound catalyst component (see, for example, Japanese Laid-Open Patent Publications Nos. 55387/1976, 63887/1976, 82385/1976, 145388/1977, 80382/1978, 65592/1977, 42584/1977, 10389/1979, 132689/1979 and 3410/1980).

According to the methods discribed in the prior art literature, the resulting polyolefins have a large particle diameter, and poor uniform dispersibility when utilized in the field of molding of powder with or without inorganic fillers and in the field of additives such as mold releasing agents, antiblocking agents and resin modifiers. Furthermore, these methods do not prove to be entirely satisfactory in regard to the polymerization activity of the catalysts.

With regard to the production of ethylene copolymers whose transparency and antiblocking property are regarded as important particularly in film applications, the use of a dissolution polymerization method which gives a relatively uniform polymerization system reduces the amount of a rubbery component in the resulting copolymers to some extent, and generally improves their transparency and antiblocking property. The extent of improvement attained by this method, however, is not sufficient, and it has been desired to develop a method which can produce an ethylene copolymer having a low content of a rubbery component and a narrow composition distribution, and particularly a high-performance catalyst for use in such a process.

SUMMARY OF THE INVENTION

It is an object of this invention to provide a method of polymerizing or copolymerizing alpha-olefins which can produce a polyolefin with very high polymerization activity.

A particular object of this invention is to provide a method of polymerizing or copolymerizing alpha-olefins by which a fine powder of a polyolefin having excellent uniform dispersibility and other properties in the field of molding such as powder molding with or without inorgnaic fillers and in the field of additives such as mold releasing agents, antiblocking agents and resin modifiers can be produced by a liquid-phase suspension polymerization technique or a vapor phase polymerization technique.

A more particular object of this invention is to provide a method of polymerizing or copolymerizing alpha-olefins by which an ethylene copolymer having a low content of a rubbery component which degrades the properties of the product such as its transparency and antiblocking property and thus having a narrow composition distribution can be produced with very high polymerization activity by a dissolution polymerization technique.

In accordance with this invention, the above objects are achieved by a method of polymerizing or

copolymerizing alpha-olefins, which comprises polymerizing or copolymerizing at least one alpha-olefin in the presence of a catalyst formed from

(A) a titanium complex component at least containing magnesium, titanium and halogen, said component being obtained by co-pulverizing a mixture at least comprising (a) a magnesium compound, (b) a titanium compound and (c) at least 150 parts by weight, per 100 parts by weight of the magnesium compound (a), of an organic halogen compound, and

(B) an organoaluminum compound component.

In accordance with this invention, the above objects, and especially the production of fine particles of a polyolefin, are also achieved by a method of polymerizing or copolymerizing alpha-olefins, which comprises polymerizing or copolymerizing at least one alpha-olefin in the presence of a catalyst formed from

(A) a titanium complex component at least containing magnesium, titanium and halogen, said component being obtained by co-pulverizing a mixture at least comprising (a) a magnesium compound, (b) a titanium compound and (c) at least 150 parts by weight, per 100 parts by weight of the magnesium compound (a), of an organic halogen compound, and contacting the resulting solid component with (d) a halogen-containing organoaluminum compound, and

(B) an organoaluminum compound component.

The term "polymerization", as used herein, may sometimes be used in the sense of copolymerization as well. The terms "polymer" and "polyolefin", as used herein, denote both a homopolymer and a copolymer.

## DETAILED DESCRIPTION OF THE PREFERRED EMBODIMENTS

The essence of the present invention is to polymerize alpha-olefins in the presence of a catalyst prepared by using a specific recipe.

The catalyst used in this invention will first be described in detail.

The titanium catalyst component (A) used as one catalyst component is a titanium complex at least containing magnesium, titanium and halogen obtained by copulverizing a mixture at least comprising (a) a magnesium compound, (b) a titanium compound and (c) at least 150 parts by weight, per 100 parts by weight of the magnesium compound, of an organic halogen compound. As required, the titanium complex component may further contain (e) an electron donor component.

The individual components in the titanium complex are intimately contacted or reacted with one another, and contain at least a magnesium compound and a titanium compound which are not substantially liberated by washing with hexane at room temperature. Its chemical structure is unknown, but it is presumed that the magnesium atoms, titanium atoms and halogen atoms and optionally the electron donor are bonded and interacted to effect firm bonding. The titanium complex may, depending upon the method of its production, contain other metal atoms such as aluminum, silicon, tin, boron, germanium, calcium and zinc or organic groups attributed to them. It may also contain inorganic or organic inert diluents such as LiCl, $CaCO_3$, $Na_2CO_3$, $SrCl_2$, $B_2O_3$, $Ba_2SO_4$, $Al_2O_3$, $SiO_2$, $SiO_2$-$Al_2O_3$, $TiO_2$, $NaB_4O_7$, $Ca_3(PO_4)_2$, $CaSO_4$, $Al_2(SO_4)_3$, $CaCl_2$, $ZnCl_2$, polyethylene, polypropylene and polystyrene.

When it is desired to impart high activity or both high activity and high stereoregularity, the above ingredients are co-pulverized with an electron donor such as an organic acid ester, an organic silicon compound and an ether to include the electron donor or an organic group attributed to it.

The halogen/titanium atomic ratio in the titanium complex component (A) is usually more than 4, preferably at least 5, more preferably from 8 to 100. The magnesium/titanium atomic ratio is usually at least 2, preferably from 5 to 50. When the titanium complex component (A) contains the electron donor, the electron donor/titanium (mole/atom) ratio is usually from 0.2 to 6, preferably from 0.4 to 3, more preferably from 0.8 to 2.

The titanium complex compound (A) has a very small average particle diameter of usually 0.001 to 10 micrometers, preferably 0.05 to 5 micrometer, and a specific surface area of usually at least 50 $m^2$, preferably 100 to 1,000 $m^2/g$, especially preferably 100 to 600 $m^2/g$.

X-ray diffractometry shows that the titanium complex component (A) contains very finely divided crystals of the magnesium compound.

Magnesium compounds containing halogen and/or an organic group are preferred as the magnesium compound (a) used to prepare the titanium complex component (A). Specific examples include dihalides, alkoxyhalides, aryloxyhalides, hydroxyhalides, dialkoxides, diaryloxides, alkoxyaryloxides, acyloxyhalides, alkylhalides, arylhalides, dialkyl compounds, diaryl compounds and alkylalkoxides of magnesium. They may be present in the form of adducts with electron donors to be described. They may be double compounds containing other metals such as aluminum, tin, silicon, germanium, zinc and boron. For example, they may be double compounds between halides, alkyl compounds, alkoxyhalides, aryloxyhalides, alkoxides, aryloxides, etc. of these metals such as aluminum, and the above-exemplified magnesium compounds. They may also be double compounds in which phosphorus, boron or silicon, for example, is bonded to magnesium metal via oxygen.

They may of course be used in combination with each other. The above-exemplified compounds may usually be expressed by simple chemical formulae. Depending upon the method of producing the magnesium compounds, they cannot be expressed by simple formulae, and they are usually regarded as mixtures of the above compounds. For example, compounds obtained by a method which comprises reacting magnesium metal with an alcohol or phenol in the presence of a halosilane, phosphorus oxychloride or thionyl chloride, or a method which comprises decomposing a Grignard reagent under heat or with a compound containing a

hydroxyl group, a carbonyl group, an ester linkage, an ether linkage, etc. are considered to be mixtures of various compounds according to the amount of the reagent used or the extent of the reaction. These compounds may also be used in this invention.

Various methods for producing the above-exemplified magnesium compounds are known, and the magnesium compound (a) used in this invention may be produced by any of such methods.

The magnesium compound may be pre-treated before use. For example, it may be dissolved in ether or acetone singly or together with another metal compound. Then, the solvent is evaporated or the solution is put in an inert solvent to separate a solid. It may also be pre-treated by mechanically pulverizing it alone or together with another metal compound.

Preferred among the above magnesium compounds are magnesium dihalides, magnesium aryloxyhalides, magnesium aryloxides, and double compounds thereof with aluminum or silicon. More specific examples include $MgCl_2$, $MgBr_2$, $MgI_2$, $MgF_2$, $MgCl(OC_6H_5)$, $Mg(OC_6H_5)_2$, $MgCl(OC_6H_4\text{-}2\text{-}CH_3)$, $Mg(OC_6H_4\text{-}2\text{-}CH_3)_2$, $(MgCl_2)_x\cdot[Al(OR)_nCl_{3-n}]_y$, and $(MgCl_2)_x[Si(OR)_mCl_{4-m}]_y$. In the above formulae, R represents a hydrocarbon group such as an alkyl or aryl group; m or n R groups may be identical or different; and m, n, x and y are integers and $0 \leqq n \leqq 3$ and $0 \leqq m \leqq 4$. $MgCl_2$ is especially preferred.

Various titanium compounds may be used as the titanium compound (b) used in the preparation of the titanium complex component (A). Usually, tetravalent or trivalent titanium compounds represented by the formula $Ti(OR)_gX_{4-g}$ or $Ti(OR)_hX_{3-n}$ wherein R represents a hydrocarbon group, X represents halogen, $0 \leqq g \leqq 4$, and $0 \leqq h \leqq 3$. Specific examples include titanium tetrahalides such as $TiCl_4$, $TiBr_4$ and $TiI_4$, alkoxy titanium trihalides such as $Ti(OCH_3)Cl_3$, $Ti(OC_2H_5)Cl_3$, $Ti(O\ n\text{-}C_4H_0)Cl_3$, $Ti(OC_2H_5)Br_3$, and $Ti(O\ iso\text{-}C_4H_9)Br_3$, alkoxytitanium dihalides such as $Ti(OCH_3)_2Cl_2$, $Ti(OC_2H_5)_2Cl_2$, $Ti(O\ n\text{-}C_4H_9)_2Cl_2$, trialkoxy titanium monohalides such as $Ti(OCH_3)_3Cl$, $Ti(OC_2H_5)_3Cl$, $Ti(O\ n\text{-}C_4H_9)_3Cl$ and $Ti(OC_2H_9)_3Br$, tetraalkoxy titaniums such as $Ti(OC_2H_5)_4$ and $Ti(O\ n\text{-}C_4H_9)_4$, and aryloxy group-substituted halotitanium compounds. Titanium trihalides such as $TiCl_3$, $TiBr_3$ and $TiI_3$ and trivalent titanium compounds resulting from substitution of an alkoxy or aryloxy group for part or the whole of the halogen groups of these trihalides may also be cited as examples. For the production of a fine powder of a polyolefin, the tetravalent titanium compounds are preferred among them, and titanium tetrachloride, tetraalkoxy titaniums and alkoxy halotitaniums are especially preferred. On the other hand, tetraalkoxy titaniums, trialkoxy titanium monohalides, and titanium trichloride are especially preferred for the production of an ethylene copolymer by a solution polymerization method.

The organic halogen compound (c) used for the preparation of the titanium complex component (A) may, for example, include halogenated hydrocarbons, halogen-containing carboxylic acid derivatives (e.g., esters, acid halides), halogenated ketones, halogenated ethers, and halogen-containing silicon compounds. Specific examples are halogenated hydrocarbons such as dichloromethane, trichloromethane, carbon tetrachloride, dichloroethane, trichloroethane, tetrachloroethane, dichloropropane, trichloropropane, 1,4-dichlorobutane, tert-butyl chloride, 2,3-dichlorobutane, chlorobenzene, benzotrichloride and hexachloropentadiene; halogen-containing carboxylic acid derivatives such as methyl trichloroacetate, ethoxyethyl trichloroacetate, ethyl 2,3,4,4-tetrachloro-3-butenoate, methyl 2,3,4,4-tetrachloro-2-butenoate, perchlorocrotonyl chloride and butyl perchlorocrotonate; halogenated ketones such as hexachloroacetone; and halogen-containing silicon compounds such as silicon tetrachcloride and silicon trichloride. Of these organic halogen compounds, the halogenated hydrocarbons are preferred, and trichloromethane, dichloromethane, dichloroethane and tetrachloroethane are especially preferred.

As examples of the halogen-containing organoaluminum compounds (d) used in the preparation of the titanium complex component (A), there may be cited halogen-containing organoaluminum compounds selected from the compounds to be exemplified hereinbelow. Dialkyl aluminum monohalides, alkyl aluminum sesquihalides and monoalkyl aluminum dihalides are preferred, and dialkyl aluminum monohalides are especially preferred.

Examples of the electron donor (e) which may be used as required in the preparation of the titanium complex component (A) are oxygen-containing electron donors such as water, alcohols, phenols, ketones, aldehydes, carboxylic acids, esters, ethers and acid amides, nitrogen-containing electron donors such as ammonia, amines, nitriles and isocyanates, and compounds containing an Si-OC bond or an Al-OC bond. Specific examples include alcohols having 1 to 18 carbon atoms such as methanol, ethanol, propanol, pentanol, hexanol, octanol, dodecanol, octadecyl alcohol, benzyl alcohol, phenethyl alcohol, cumyl alcohol and isopropylbenzyl alcohol; phenols having 6 to 15 carbon atoms which may contain a lower alkyl group, such as phenol, cresol, xylenol, ethylphenyl, propylphenol, cumylphenol and naphthol; ketones having 3 to 15 carbon atoms such as acetone, methyl ethyl ketone, methyl isobutyl ketone, acetophenone and benzophenone; aldehydes having 2 to 15 carbon atoms such as acetaldehyde, propionaldehyde, octyl aldehyde, benzaldehyde, tolualdehyde and naphthaldehyde; organic esters having 2 to 18 carbon atoms such as methyl formate, methyl acetate, methyl acetate, ethyl acetate, vinyl acetate, propyl acetate, octyl acetate, cyclohexyl acetate, ethyl propionate, methyl butyrate, ethyl valerate, methyl chloroacetate, ethyl dichloroacetate, methyl methacrylate, ethyl crotonate, ethyl cyclohexanecarboxylate, methyl benzoate, ethyl benzoate, propyl benzoate, butyl benzoate, octylbenzoate, cyclohexyl benzoate, phenyl benzoate, benzyl benzoate, methyl toluate, ethyl toluate, amyl toluate, ethyl ethylbenzoate, methyl anisate, ethyl anisate, ethyl ethoxybenzoate, gamma-butyrolactone, delta-valerolactone, coumarin, phthalide and ethylene carbonate; acid halides having 2 to 15 carbon atoms such as acetyl chloride, benzyl chloride, toluoyl chloride and anisoyl chloride; ethers having 2 to 20 carbon atoms such as methyl ether, ethyl ether, isopropyl ether, butyl ether, amyl ether,

tetrahydrofuran, anisole and diphenyl ether; acid amides such as acetamide, benzamide and toluamide; amines such as methylamine, ethylamine, diethylamine, tributylamine, piperidine, tribenzylamine, aniline, pyridine, pyrroline, and tetramethylethylenediamine; nitriles such as acetonitrile, benzonitrile and tolunitrile; and aluminum, silicon and tin compounds containing these functional groups in the molecule.

Examples of the silicon compounds having an Si-O-C bond include trimethylmethoxysilane, trimethylethoxysilane, dimethyldimethoxysilane, dimethyldiethoxysilane, diisopropyldimethoxysilane, t-butylmethylmethoxysilane, t-butylmethyldiethoxysilane, t-amylmethyldiethoxysilane, diphenyldimethoxysilane, phenylmethyldimethoxysilane, diphenyldiethoxysilane,, bis-o-tolyldimethoxysilane, bis-m-tolyldimethoxysilane, bis-p-tolyldimethoxysilane, bis-p-tolyldiethoxysilane, p-tolylmethyldimethoxysilane, bisethylphenyldimethoxysilane, dicyclohexyldimethoxysilane, cyclohexylmethyldimethoxysilane, cyclohexylmethyldiethoxysilane, ethyltrimethoxysilane, ethyltrimethoxysilane, vinyltrimethoxysilane, methyltrimethoxysilane, n-propyltriethoxysilane, decyltrimethoxysilane, decyltriethoxysilane, phenyltrimethoxysilane, gamma-chloropropyltrimethoxysilane, methyltriethoxysilane, ethyltriethoxysilane, vinyltriethoxysilane, t-butyltriethoxysilane, n-butyltriethoxysilane, iso-butyltriethoxysilane, phenyltriethoxysilane, gamma-aminopropyltriethoxysilane, chlorotriethoxysilane, ethyltriisopropoxysilane, vinyltributoxysilane, cyclohexyltrimethoxysilane, cyclohexyltriethoxysilane, 2-norbornenetrimethoxysilane, 2-norbornanetriethoxysilane, 2-norbornanemethyldimethoxysilane, ethyl silicate, butyl silicate, trimethylphenoxysilane, methyltriallyloxysilane, vinyltris(beta-methoxyethoxy)silane, vinyltriacetoxysilane and dimethyltetraethoxysiloxane. Particularly preferred are ethyltriethoxysilane, n-propyltriethoxysilane, t-butyltriethoxysilane, vinyltriethoxysilane, phenyltriethoxysilane, vinyltributoxysilane, diphenyldimethoxysilane, phenylmethyldimethoxysilanebis-p-tolyldimethoxysilane, p-tolylmethyldimethoxysilane, dicyclohexyldimethoxysilane, cyclohexylmethyldimethoxysilane, 2-norbornanetriethoxysilane, 2-norbornanemethyldimethoxysilane, diphenyldiethoxysilane and ethyl silicate.

Examples of the aluminum compounds having an Al-O-C bond include triethoxy aluminum, tri-n-propoxy aluminum, tri-isopropoxy aluminum, tri-n-butoxy aluminum, tri-iso-butoxy aluminum, tri-tert-butoxy aluminum, tri-sec-butoxy aluminum, tri-n-hexyloxy aluminum, tri-iso-hexyloxy aluminum, tri-n-octyloxy aluminum, tris-2-ethylhexyloxy aluminum, diethoxy aluminum monochloride, di-n-propoxyaluminum monochloride, di-iso-propoxy aluminum monochloride, di-n-butoxy aluminum monochloride, di-iso-butoxy aluminum monochloride, di-tert-butoxy aluminum monochloride, di-sec-butoxy aluminum monochloride, di-n-hexyloxy aluminum monochloride, di-iso-hexyloxy aluminum monochloride, di-n-octyloxy aluminum monochloride, and di-2-ethylhexyloxy aluminum monochloride.

Two or more of these electron donors may be used in combination.

In the present invention, a solid component may be prepared from the mixture composed at least of the magnesium compound (a), the titanium compound (b) and the organic halogen compound (c) by the following methods prior to the preparation of the titanium complex component (a).

(1) A method which compriss co-pulverizing a mixture containing the magnesium compound (a), the titanium compound (b) and the organic halogen component (c).

(2) A method which comprises copulverizing the mixture containing the magnesium compound (a) and the organic halogen compound (c), then adding the titanium compound (b), and copulverizing the mixture further.

(3) A method which comprises copulverizing the magnesium compound (a) and the titanium compound (b), then adding the organic halogen compound (c), and copulverizing the mixture further.

(4) A method which comprises pulverizing the magnesium compound (a), adding the titanium compound (b) and the organic halogen compound (c) simultaneously or at some time interval, and copulverizing the mixture further.

(5) A method which comprises contacting and reacting the copulverized mixture obtained by any of the methods (1), (2), (3) and (4) with the above-mentioned titanium compound, and then separating a solid portion.

(6) A method which comprises contacting and reacting the copulverized mixture obtained by any of the methods (1), (2), (3) and (4) with the above-mentioned organic halogen compound, and then separating a solid portion.

The solid component obtained by co-pulverization in the methods (1), (2), (3) and (4) may be used directly in a subsequent contacting treatment with the halogen-containing organic aluminum compound (d) without washing it with an inert solvent. This is advantageous to the preparation of the catalyst.

When the electron donor (e) is used as a catalyst component in any of the above methods, the electron donor may be added in any of the steps in the methods and copulverized. Alternatively, it may be added as an adduct or complex with magnesium or the titanium compound. The copulverization treatment may be carried out in the presence of the aforesaid organic or inorganic inert diluents, a halogenating agent such as a halogen compound of silicon, and additional ingredients such as polysiloxanes, other silicon compounds which may be included in the titanium complex (A), or part of the titanium compound. The electron donor may be present in the form of an adduct (complex) with such a compound.

A rotating ball mill, a vibratory ball mill, an impact mill, etc. may be used in the copulverization treatment in the preparation of the solid titanium complex component (A). For example, the rotating ball mill may consist of a ball mill cylinder made of stainless steel (SUS32) and having a capacity of 800 ml and an inside diameter of 100 mm and 100 ball mills of stainless steel (SUS32) having a diameter of 15 mm placed therein. If the amount of the compounds to be treated is 20 to 40 g, the copulverization may be carried out by operating the ball mill at

a rotating speed of 125 rpm for a period of preferably at least 24 hours, preferably at least 48 hours. The temperature at which the copulverization treatment is effected is usually about 0 to 100 °C. The titanium complex obtained may be washed as required.

The amount of the titanium compound (b) used at the time of copulverization in the preparation of the titanium complex component (A) is usually 0.005 to 1.5 moles, preferably 0.01 to 1.0 mole, especially preferably 0.05 to 0.5 mole, per mole of the magnesium compound.

The amount of the organic halogen compound (c) used at the time of copulverization is usually at least 150 parts by weight, preferably 200 to 5,000 parts by weight, especially preferably 250 to 3,000 parts by weight, per 100 parts by weight of the magnesium compound (a).

The proportion of the halogen-containing organoaluminum compound used in the contacting treatment, as the atomic ratio of aluminum atoms to titanium atoms in the solid component (Al/Ti), is usually from 1 to 1,000, preferably from 2 to 300, especially preferably from 4 to 100.

Preparation of the titanium complex component (A) by contacting the solid component with the halogen-containing organoaluminum compound (d) may be carried out by a method which comprises contacting a suspension composed of the solid component and an inert solvent with the halogen-containing organoaluminum compound (d), or a method which comprises contacting a solution composed of the halogen-containing organoaluminum compound (d) and a inert solvent with the solid component.

The treatment of the titanium complex component (A) with the halogen-containing organoaluminum compound (d) may be carried out in a liquid inert solvent at a temperature of preferably not more than about 90 °C, especially preferably 0 to 50 °C, for a period of preferably about 5 seconds to about 30 hours, especially preferably about 1 minute to about 5 hours. Examples of solvents suitable for this purpose include aliphatic hydrocarbons such as butane, n-pentane, isopentane, n-hexane, isohexane, n-heptane, n-octane, isooctane, n-decane, n-dodecane, kerosene and liquid paraffins; alicyclic hydrocarbons such as cyclopentane, methylcyclopentane, cyclohexane and methyl cyclohexane; aromatic hydrocarbons such as benzene, toluene, xylene and cymene; the above-exemplified organic halogen compounds (c); and mixtures of these.

The concentration of the titanium complex (A) in the inert solvent in the above treatment is preferably about 0.01 to about 500 millimoles/liter, especially preferably about 0.5 to about 100 millimoles/liter.

In the above treatment, all the pulverized mixture obtained by copulverization may be used in the above treatment. Alternatively, the solid component alone is separated from the mixture and then used in the above treatment. After the treatment, the mixed suspension obtained by the treatment may all be used in the polymerization, or only the solid component may be separated from it and then used in the polymerization. The former is preferred because the separating operation can be omitted.

Compounds having one Al-C bond in the molecule may be used as the organoaluminum compound component (B) used as a component constituting the catalyst. Examples are shown below.

(i) Organoaluminum compounds represented by the general formula

$(R^1)_mAl(OR^2)_nH_pX_q$

wherein $R^1$ and $R^2$ are identical or different and each represents a hydrocarbon group containing 1 to 15 carbon atoms, preferably 1 to 4 carbon atoms, X represents halogen, m is a number represented by $0<m\leqq3$, n is a number represented by $0\leqq n<3$, p is a number represented by $0\leqq p<3$, and q is a number represented by $0\leqq m<3$, and $m + n + p + q=3$.

(ii) Complex alkylated products of metals of Groups I and aluminum represented by the general formula

$M^1Al(R^1)_4$

wherein $M^1$ represents Li, Na or K, and $R^1$ is as defined above.

Examples of the organoaluminum compounds (i) are as follows:-

Organoaluminum compounds represented by the general formula

$(R^1)_mAl(OR^2)_{3-m}$

wherein $R^1$ and $R^2$ are as defined, and m is preferably a number represented by $1.5\leqq m<3$;

organoaluminum compounds represented by the general formula

$(R^1)_mAlX_{3-m}$

wherein $R^1$ is as defined above, X represents halogen, and $0<m<3$;

organoaluminum compounds represented by the general formula

$(R^1)_mAlH_{3-m}$

wherein $R^1$ is as defined above, and m is preferably a number represented by $2\leqq m<3$; and

organoaluminum compounds represented by the general formula

$(R^1)_mAl(OR^2)_nX_q$

wherein $R^1$ and $R^2$ are as defined above, X is as defined above, m is a number represented by $0<m\leqq3$, n is a number represented by $0\leqq n<3$, and q is a number represented by $0\leqq q<3$, and $m + n + q=3$.

Specific examples of the aluminum compounds (i) include trialkyl aluminums such as triethyl aluminum amd tributyl aluminum; trialkenyl aluminums such as triisoprenyl aluminum; alkyl aluminum sesquialkoxides such as ethyl aluminum sesquiethoxide and butyl aluminum sesquibutoxide; partially alkoxylated alkyl aluminums having an average composition represented by the general formula $(R^1)_{2.5}Al(OR^2)_{0.5}$; partially halogenated alkyl aluminums, for example dialkyl aluminum halides such as diethyl aluminum chloride, dibutyl aluminum chloride and diethyl aluminum bromide, alkyl aluminum sesquihalides such as ethyl aluminum sesquichloride, butyl aluminum sesquichloride and ethyl aluminum sesquibromide, and alkyl aluminum dihalides such as ethyl aluminum dichloride, propyl aluminum dichloride and butyl aluminum dibromide; partially hydrogenated alkyl

aluminums, for example dialkyl aluminum hydrides such as diethyl aluminum hydride and dibutyl aluminum hydride and alkyl aluminum dihydrides such as ethyl aluminum dihydride and propyl aluminum dihydride; and partially alkoxylated and halogenated alkyl aluminums such as ethyl aluminum ethoxychloride, butyl aluminum butoxy chloride and ethyl aluminum ethoxy bromide. Organoaluminum compounds in which two or more aluminum atoms are bonded via an oxygen or nitrogen atom, hich are similar to the compounds (i), may also be used. Examples of such compounds are $(C_2H_5)_2AlOAl(C_2H_5)_2$, $(C_4H_9)_2AlOAl(C_4H_9)_2$, and

$$(C_2H_5)_2Al\underset{\displaystyle C_2H_5}{\underset{|}{N}}Al(C_2H_5)_2.$$

. The above-exemplified compounds may be used in combination.

Examples of the compounds (ii) are $LiAl(C_2H_5)_4$ and $LiAl(C_7H_{15})_4$.

In the method of this invention, the polymerization may be carried out in the presence of an elecron donor component (C) as a catalyst-forming component in addition to the above titanium complex component (a) and organoaluminum compound component (B). Examples of the electron donor component include oxygen-containing electron donors such as water, alcohols, phenols, ketones, aldehydes, carboxylic acids, esters, ethers and acid amides, nitrogen-containing electron donors such as ammonia, amines, nitriles and isocyanates, and organic silicon compounds having an Si-O-C bond, which have been cited hereinabove as examples of the electron donor constituting the titanium complex component (a).

Specific examples of alpha-olefins used in the method of this invention are ethylene, propylene, 1-butene, 1-hexene, 4-methyl-1-pentene, 1-octene, 1-decene, 1-dodecene, and mixtures of these. Suitable alpha-olefins are those which can give crystalline polymers.

In the method of this invention, the catalyst components may be used in the following amounts in the polymerization reaction. Per liter of the reaction volume, the amount of the titanium complex component (A) is usually 0.001 to 1.0 milligram-atom, preferably 0.001 to 1.0 milligram-atom, calculated as titanium atom; the amount of the organoaluminum compound component (b) is usually 100 to 0.01 milligram-atom, preferably 10 to 0.1 milligram-atom, calculated as aluminum atom; and the amount of the electron donor (C) which may be added to the polymerization system as required is usually 100 to 0.01 mole, preferably 10 to 0.1 mole. The ratio of the organoaluminum compound component (B) to the titanium complex component (a), as the Al/Ti atomic ratio, is usually from 1 to 1,000, preferably from 10 to 200. When the electron donor component (C) is used, the ratio between the organoaluminum compound (B) and the electron donor (C) is such that 0.02 to 2 moles of the electron donor is usually employed per gram-atom of aluminum in the organoaluminum compound (B).

These catalyst components may be contacted with each other during or before the polymerization. If the electron donor component (C) is used, only two components may be selected from the catalyst-forming components and contacted. Or portions of two or three components may be contacted with each other. The contacting of the individual components before polymerization may be carried out in an atmosphere of an inert gas or in an atmosphere of an olefin.

In the method of this invention, the polymerization may be carried out in a hydrocarbon medium or a hydrocarbon diluent. The hydrocarbon medium or diluent may partly or wholly be the starting olefin itself. Examples of the hydrocarbon medium include aliphatic hydrocarbons such as propane, butane, pentane, hexane, heptane, octane, decane, dodecane and kerosene, aromatic hydrocarbons such as benzene, toluene and xylene, and halogenated hydrocarbons such as ethylene chloride and chlorobenzene.

When the polymerization reaction in the method of this invention is carried out by a liquid-phase suspension polymerization technique, the polymerization temperature is usually 20 to 130 °C, preferably 50 to 100 °C, and the polymerization pressure is usually 0 to 100 kg/cm$^2$-G, preferably 2 to 50 kg/cm$^2$-G. When the polymerization reaction is carried out by a vapor-phase polymerization method, the polymerization temperature is usually 20 to 120 °C, preferably 50 to 100 °C, and the polymerization pressure is usually 1 to 100 kg/cm$^2$-G, preferably 2 to 50 kg/cm$^2$-G. When the polymerization reaction is carried out by a dissolution polymerization method, the polymerization temperature is usually 50 to 300 °C, preferably 80 to 250 °C, and the polymerization pressure is usually 0 to 100 kg/cm$^2$-G, preferably 2 to 50 kg/cm$^2$-G. In the polymerization reaction, the molecular weight of the product may be adjusted by changing polymerization conditions such as the polymerization temperature and the proportions of the catalyst components used. Supply of hydrogen to the reaction system, however, is most effective.

The reaction mixture obtained at the end of the polymerization reaction is treated in a customary manner to give the polyolefin produced.

The polyolefin obtained by the liquid-phase suspension polymerization method or the vapor-phase method is a fine powder having an average particle diameter of usually 1 to 80 micrometers, preferably 5 to 60 micrometers, and a bulk density of usually 0.10 to 0.50 g/cm$^3$, preferably 0.15 to 0.40 g/cm$^3$.

The polyolefin obtained by the dissolution polymerization method is characterized by having a low content of a rubbery copolymer, particularly when its density is not more than 0.940 g/cm$^3$. In the present invention, the amount of the rubbery copolymer is measured as the amount of a component which is soluble in n-decane at 25 °C. This amount, $W_1$ (wt. %), is represented by the following expression as a function of the density, D (g/ml), of the copolymer.

$W_1 < 5000(D - 0.945)^2$

$D \leq 0.940$ g/cm$^3$. The density is measured after heat-treating the sample at 120 °C for 1 hour and gradually cooling it to room temperature over 1 hour.

Since $W_1$ also depends upon the molecular weight of the copolymer, it should be understood that the above relation holds good when the melt index of the copolymer is in the range of 0.5 to 3 g/10 min.

The amount of that portion of the copolymer which is soluble in n-decane at 25 °C is measured and determined by the following method. Five grams of the copolymer sample and 1 liter of n-decane are introduced into a 2-liter flask equipped with a stirring vane and a reflux condense, and maintained at 130 to 140 °C for at least 2 hours to dissolve the sample thoroughly in n-decane. Thereafter, the solution is cooled to 25 °C over the course of about 8 hours and maintained at 25 °C for 8 hours. The n-decane suspension containing the precipitated copolymer and the dissolved polymer was filtered through a G-4 glass filter. The filtrate is dried at 150 °C under a reduced pressure of about 10 mmHg until its amount becomes constant. Thus, the polymer dissolved in n-decane at 25 °C is collected and its weight, measured. The amount of the copolymer soluble in n-decane can be calculated as the percentage based on the weight of the sample copolymer.

The method of this invention can give a polyolefin with very high polymerization activity.

Particularly, in one preferred embodiment of the invention, the method of this invention can produce with very high polymerization activity a fine polyolefin powder which gives molded articles having an excellent appearance and a reduced tendency to undergo surface roughening or whitening due to foams in the field of powder molding, has excellent high-density fillability and uniform dispersibility in the field of producing an inorganic filler-incorporated composition, and has excellent uniform dispersibility in the field of additives such as mold releasing agents, antiblocking agents and resin modifiers.

The methods of this invention are further characterized by the fact that during polymerization, little or no adhesion of the polymer occurs on the wall surface of the polymerization reactor.

In another preferred embodiment of the invention, the method of this invention can produce with very high polymerization activity an ethylene copolymer having a narrow composition distribution, namely a low content of a rubbery component which may degrade the properties of the product such as transparency or anti-blocking property.

The following examples illustrate the present invention more specifically.

EXAMPLE 1

Preparation of a titanium complex component

Anhydrous magnesium chloride (17 g), 8.7 ml of tetra-2-ethylhexoxy titanium and 50 ml of 1,2-dichloroethane were introduced under a nitrogen atmosphere into a stainless steel (SUS-32) ball mill having an inner capacity of 800 ml and an inside diameter of 100 mm and containing 2.8 kg of stainless steel (SUS-32) balls with a diameter of 15 mm, and contacted for 24 hours at an impact acceleration of 7G. The pulverized product was taken out under a nitrogen atmosphere.

Polymerization

A 2-liter autoclave was charged with 1 liter of purified hexane, and at room temperature under an ethylene atmosphere, further with 1.0 mmole of triethyl aluminum as the organoaluminum compound component (B) and 0.01 mmole, as titanium atom, of a suspension containing the titanium complex component (A) taken out from the ball mill. The temperature was elevated to 70 °C. Ethylene was introduced and pressurized to 2 kg/cm$^2$-G, and then polymerized for 1 hour.

After the polymerization, the slurry containing the polymer formed was filtered to separate it into a white powdery polymer and a liquid portion. The amount of the white powdery polymer after drying was 91 g. The particle size distribution of the white powdery polymer is shown in Table 1.

EXAMPLE 2

Preparation of a titanium complex component

The copulverization product in suspension form obtained in Example 1 was filtered through a G4 glass filter under an atmosphere of nitrogen to separate a solid portion. It was fully washed with purified hexane to give a titanium complex component (A) containing 1.7 % by weight of titanium atoms.

Polymerization

Ethylene was polymerized in the same way as in Example 1 except that the titanium complex component (A) prepared above was used instead of the one used in Example 1.

COMPARATIVE EXAMPLE 1

Anhydrous magnesium chloride (17 g) and 8.7 ml of tetra-2-ethylhexoxy titanium were introduced under a nitrogen atmosphere into a stainless steel (SUS-32) ball mill having an inner capacity of 800 ml and an inside diameter of 100 mm and containing 2.8 kg of stainless steel (SUS-32) balls with a diameter of 15 mm, and contacted for 24 hours at an impact acceleration of 7G. The pulverized product was taken out under a nitrogen atmosphere, and suspended in hexane.

Using the resulting titanium complex component (A), ethylene was polymerized in the same way as in Example 1. The results are shown in Table 1.

COMPARATIVE EXAMPLE 2

The copulverization product obtained in Comparative Example 1 was suspended in 150 ml of 1,2-dichloroethane. Using the resulting titanium complex component (A), ethylene was polymerized in the same way as in Example 1. The results are shown in Table 1.

COMPARATIVE EXAMPLE 3

A titanium complex component (A) was prepared in the same way as in Example 1 of Japanese Laid-Open Patent Publication No. 21403/1982.

Specifically, 20 g of anhydrous magnesium chloride, 1.5 ml of ethyl ortho-acetate and 3.5 ml of 1,2-dichloroethane were pulverized for 40 hours. The pulverized product (10 g) and 50 ml of titanium tetrachloride were put in a 200 ml round-bottomed flask, and stirred at 80 °C for 2 hours. The supernatant was removed by decantation, and the residue was washed fully with n-heptane.

Using the resulting titanium complex component (A), ethylene was polymerized in the same way as in Example 1. The results are shown in Table 1.

Table 1

| Run | Amount yielded (g) | Polymerization activity (g/mM-Ti) | Particle size distribution (wt%) | | | |
|---|---|---|---|---|---|---|
| | | | >177 μm | 88-177 μm | 44-88 μm | 44 μm> |
| Example 1 | 91 | 9,100 | 0.5 | 3.8 | 57.4 | 38.3 |
| " 2 | 115 | 11,500 | 0.4 | 4.1 | 56.7 | 38.8 |
| Comp. Example 1 | 30 | 3,000 | 43.3 | 43.1 | 10.4 | 3.2 |
| " 2 | 41 | 4,100 | 47.2 | 40.6 | 7.9 | 4.3 |
| " 3 | 33 | 3,300 | 65.2 | 17.1 | 14.6 | 3.1 |

EXAMPLES 3-4

Example 1 was repeated except that the titanium compounds indicated in Table 2 in the amounts indicated were used instead of 8.7 ml of tetra-2-ethylhexoxy titanium used in Example 1. The results are shown in Table 2.

Table 2

| Run | Titanium compound | Polymerization activity (g/mM-Ti) | Particle size distribution (wt%) | | | |
|---|---|---|---|---|---|---|
| | | | >177 $\mu m$ | 88-177 $\mu m$ | 44-88 $\mu m$ | 44 $\mu m$> |
| Example 3 | $Ti(OEt)_4$ 3.0ml | 10,700 | 0.5 | 4.6 | 57.2 | 37.7 |
| " 4 | $TiCl_4$ 1.6ml | 9,000 | 0.3 | 4.9 | 49.6 | 35.2 |

EXAMPLE 5

Preparation of a titanium complex component

Anhydrous magnesium chloride (17 g) and 8.7 ml of tetra-2-ethylhexoxy titanium were introduced under an atmosphere of nitrogen into a stainless steel (SUS-32) ball mill having an inner capacity of 800 ml and an inside diameter of 100 mm and containing 2.8 kg of stainless steel (SUS-32) balls with a diameter of 15 mm, and contacted for 24 hours at an impact acceleration of 7G. Under a nitrogen atmosphere, 200 ml of 1,2-dichloroethane was added to the ball mill and further contacted with the pulverized product for 24 hours at an impact acceleration of 7G. The contents were then taken out under a nitrogen atmosphere.

Polymerization

Ethylene was polymerized in the same way as in Example 1 except that the resulting titanium complex component (A) was used instead of the one used in Example 1. The results are shown in Table 3.

EXAMPLE 6

Preparation of a titanium complex component

Anhydrous magnesium chloride (17 g) and 50 ml of 1,2-dichloroethane were introduced under an atmosphere of nitrogen into a stainless steel (SUS-32) ball mill having an inner capacity of 800 ml and an inside diameter of 100 mm and containing 2.8 kg of stainless steel (SUS-32) balls with a diameter of 15 mm, and contacted for 24 hours at an impact acceleration of 7G. Under a nitrogen atmosphere, 200 ml of 1,2-dichloroethane and 8.7 ml of tetra-2-ethylhexoxy titanium were added to the ball mill and further contacted with the pulverized product for 24 hours at an impact acceleration of 7G. The contents were then taken out under a nitrogen atmosphere.

Polymerization

Ethylene was polymerized in the same way as in Example 1 except that the resulting titanium complex component (A) was used instead of the one used in Exampel 1. The results are shown in Table 3.

Table 3

| Run | Polymerization activity (g/mM-Ti) | Particle size distribution (wt%) | | | |
|---|---|---|---|---|---|
| | | >177 μm | 88-177 μm | 44-88 μm | 44 μm> |
| Example 5 | 8,700 | 0.7 | 4.6 | 57.7 | 37.0 |
| " 6 | 8,500 | 0.5 | 3.8 | 50.7 | 45.0 |

EXAMPLES 7-8

Example 1 was repeated except that the compounds indicated in Table 4 were used instead of 1,2-dichloroethane used in Example 1. The results are shown in Table 4.

Table 4

| Run | Organic halogen compound (c) | Polymerization activity (g/mM-Ti) | Particle size distribution (wt%) | | | |
|---|---|---|---|---|---|---|
| | | | >177 µm | 88-177 µm | 44-88 µm | 44 µm> |
| Example 7 | Chlorobenzene | 8,400 | 1.6 | 10.6 | 49.6 | 38.2 |
| " 8 | Carbon tetrachloride | 7,900 | 1.1 | 11.1 | 53.2 | 34.6 |

EXAMPLE 9

Preparation of a titanium complex component (A)

Anhydrous magnesium chloride (17 g), 8.7 ml of tetra-2-ethylhexoxy titanium and 50 ml of 1,2-dichloroethane were introduced under a nitrogen atmoshere into a stainless steel (SUS-32) ball mill having an inner

capacity of 800 ml and an inside diameter of 100 mm and containing 2.8 kg of stainless steel (SUS-32) balls with a diameter of 15 mm, and contacted for 24 hours at an impact acceleration of 7G. Then, under a nitrogen atmosphere, 100 ml of 1,2-dichloroethane was added to the ball mill, and further contacted with the pulverization product for about 1 hour at an impact acceleration of 7G. Nearly all of the contents were taken out from the ball mill and transferred to a 400 ml glass vessel equipped with a stirrer. Diethyl aluminum monochloride (36 ml) was added to the vessel, and the mixture was stirred at room temperature for 24 hours.

Polymerization

A 2-liter autoclave was charged with 1 liter of purified hexane, and at room temperature under an ethylene atmosphere, further with 0.45 mmole of triethyl aluminum as the organoaluminum compound component (B) and 0.025 mmole, as titanium atom, of a suspension containing the titanium complex component (A) treated with the organoaluminum compound. The temperature was elevated to 70 °C. Ethylene was introduced and pressurized to 2 kg/cm$^2$-G, and then polymerized for 1 hour.

After the polymerization, the slurry containing the polymer formed was filtered to separate it into a white powdery polymer and a liquid phase portion. The amount of the white powdery polymer yielded after drying was 107 g. No polymer adhesion was seen on the wall surface of the autoclave and the stirring vane. The particle size distribution of the white powdery polymer is shown in Table 5.

EXAMPLE 10

Example 9 was repeated except that in the preparation of the titanium complex component (A), the copulverized product and diethyl aluminum monochloride were contacted by stirring them at 80° C for 1 hour instead of stirring them at room temperature for 24 hours. The results are shown in Table 5.

EXAMPLE 11

Example 9 was repeated except that the copulverization product in suspension form taken out from the ball mill was directly used in the polymerization without subjecting it to a contacting treatment with diethyl aluminum chloride. The results are shown in Table 5.

Table 5

| Run | Amount yielded (g) | Polymerization activity (g/mM-Ti) | Particle size distribution (wt%) | | | |
|---|---|---|---|---|---|---|
| | | | >177 μm | 88-177 μm | 44-88 μm | 44 μm> |
| Example 9 | 107.3 | 42,900 | 0.5 | 1.3 | 37.0 | 61.3 |
| " 10 | 96.6 | 38,600 | 0.4 | 1.3 | 38.5 | 59.8 |
| " 11 | 23.4 | 9,400 | 0.6 | 3.7 | 58.6 | 37.1 |

EXAMPLES 12-13

Example 9 was repeated except that in the preparation of the titanium complex component (A), the titanium compounds indicated in Table 6 in the amounts indicated were used instead of 8.7 ml of tetra-2-ethylhexoxy titanium used in Example 9. The results are shown in Table 6.

Table 6

| Run | Titanium compound | Polymerization activity (g/mM-Ti) | Particle size distribution (wt%) | | | |
|---|---|---|---|---|---|---|
| | | | >177 µm | 88-177 µm | 44-88 µm | 44 µm> |
| Example 12 | $Ti(OEt)_4$ 3.0ml | 39,600 | 0.3 | 1.6 | 39.6 | 58.5 |
| " 13 | $TiCl_4$ 1.6ml | 40,300 | 0.4 | 1.2 | 37.3 | 61.1 |

<u>Preparation of a titanium complex component (A)</u>

Anhydrous magnesium chloride (17 g) and 8.7 ml of tetra-2-ethylhexoxy titanium were introduced under a nitrogen atmoshere into a stainless steel (SUS-32) ball mill having an inner capacity of 800 ml and an inside diameter of 100 mm and containing 2.8 kg of stainless steel (SUS-32) balls with a diameter of 15 mm, and contacted for 24 hours at an impact acceleration of 7G. Then, under a nitrogen atmosphere, 200 ml of 1,2-dichloroethane was added to the ball mill, and further contacted with the pulverization product for 24 hours at an impact acceleration of 7G. The contents were taken out from the ball mill and transferred to a 400 ml glass vessel equipped with a stirrer. Diethyl aluminum monochloride (36 ml) was added to the vessel, and the mixture was stirred at room temperature for 24 hours.

<u>Polymerization</u>

Using the resulting titanium complex component (A), ethylene was polymerized in the same way as in Example 9. The results are shown in Table 7.

EXAMPLE 15

<u>Preparation of a titanium complex component (A)</u>

Anhydrous magnesium chloride (17 g) and 50 ml of 1,2-dichloroethane were introduced under a nitrogen atmoshere into a stainless steel (SUS-32) ball mill having an inner capacity of 800 ml and an inside diameter of 100 mm and containing 2.8 kg of stainless steel (SUS-32) balls with a diameter of 15 mm, and contacted for 24 hours at an impact acceleration of 7G. Then, under a nitrogen atmosphere, 200 ml of 1,2-dichloroethane and 8.7 ml of tetra-2-ethylhexoxy titanium were added to the ball mill, and further contacted with the pulverization product for about 24 hours at an impact acceleration of 7G. The contents were taken out from the ball mill and transferred to a 400 ml glass vessel equipped with a stirrer. Diethyl aluminum monochloride (36 ml) was added to the vessel, and the mixture was stirred at room temperature for 24 hours.

<u>Polymerization</u>

Using the resulting titanium complex component (A), ethylene was polymerized in the same way as in Example 9. The results are shown in Table 7.

<u>Table 7</u>

| Run | Polymerization activity (g/mM-Ti) | Particle size distribution (wt%) | | | |
|---|---|---|---|---|---|
| | | >177 μm | 88-177 μm | 44-88 μm | 44 μm> |
| Example 14 | 36,200 | 0.5 | 2.1 | 41.6 | 55.8 |
| " 15 | 31,700 | 0.3 | 1.9 | 47.2 | 50.6 |

EXAMPLES 16-17

Example 9 was repeated except that the compounds indicated in Table 8 were used instead of 1,2-dichloroethane used in Example 9. The results are shown in Table 8.

Table 8

| Run | Organic halogen compound (c) | Polymerization activity (g/mM-Ti) | Particle size distribution (wt%) | | | |
|---|---|---|---|---|---|---|
| | | | >177 μm | 88-177 μm | 44-88 μm | 44 μm> |
| Example 16 | Chlorobenzene | 30,100 | 1.6 | 5.1 | 48.3 | 45.0 |
| " 17 | Carbon tetrachloride | 28,700 | 1.3 | 7.6 | 50.6 | 40.5 |

EXAMPLE 18

Example 9 was repeated except that in the preparation of the titanium complex component (A), 33 ml of ethyl aluminum sesquichloride was used instead of 36 ml of diethyl aluminum monochloride. The results are shown in Table 9.

EXAMPLE 19

Example 9 was repeated except that in the preparation of the titanium complex component (A), 39 ml of triethyl aluminum was used instead of 36 ml of diethyl aluminum monochloride. The results are shown in Table 9.

Table 9

| Run | Halogen-containing aluminum compound (d) | Polymerization activity (g/mM-Ti) | Particle size distribution (wt%) | | | |
|---|---|---|---|---|---|---|
| | | | >177 μm | 88-177 μm | 44-88 μm | 44 μm> |
| Example 18 | Ethyl aluminum sesquichloride | 37,200 | 0.4 | 1.7 | 39.3 | 58.6 |
| " 19 | Triethyl aluminum | 13,200 | 0.5 | 3.6 | 59.3 | 36.6 |

EXAMPLE 20

A 2-liter autoclave was charged with 800 ml of purified cyclohexane and 200 ml of 4-methylpentene-1, and then 750 Nml of hydrogen was introduced. At 150 °C, 0.4 mmole of diethyl aluminum monochloride and 0.005 mmole, as titanium atom, of the titanium complex component (A) prepared in Example 2 were added. Then, ethylene was introduced. The inside of the autoclave was mainained at 25 $kg/cm^2$-G for 40 minutes and the polymerization temperature was maintained at 170 °C. Forty minutes after introduction of ethylene, ethanol was added to the autoclave to stop the polymerization. There was obtained 87 g of a polymer having a density of 0.919 $g/cm^3$ and a melt index of 1.6 g/10 min. Hence, the polymerization activity was 17,400 g/milligram Ti atom. The amount of an n-decane-soluble portion at 25 °C was 2.0 % by weight.

EXAMPLE 21

Anhydrous magnesium chloride (17 g), 2.7 g of titanium trichloride (TAC-131), 8.9 mmoles of bis-2-ethylhexyloxy aluminum chloride and 50 ml of 1,2-dichloroethane were introduced under a nitrogen atmosphere into a stainless steel (SUS-32) ball mill having an inner capacity of 800 ml and an inside diameter of 100 mm and containing 2.8 kg of stainless steel (SUS-32) balls with a diameter of 15 mm, and contacted for 24 hours at an impact acceleration of 7G. The pulverized product was then treated in the same way as in Example 2 to prepare a titanium complex component (A). Ethylene was then polymerized in the same way as in Example 20 using the resulting titanium complex component (A). There was obtained 73 g of a polymer having a density of 0.914 $g/cm^3$ and a melt index of 1.6 g/10 min. Hence, the polymerization activity was 14,600 g/millimole of Ti. The amount of an n-decane-soluble portion at 25 °C was 3.3 % by weight.

**Claims**

1. A method of polymerizing or copolymerizing alpha-olefins, which comprises polymerizing or copolymerizing at least one alpha-olefin in the presence of a catalyst formed from

(A) a titanium-containing component at least containing magnesium, titanium and halogen, and

(B) an organoaluminum compound component, characterised in that the titanium-containing component (a) has been obtained by co-pulverizing a mixture at least comprising (a) a magnesium compound, (b) a titanium compound and (c) at least 150 parts by weight, per 100 parts by weight of the magnesium compound (a), of an organic halogen compound.

2. A method according to claim 1 wherein the catalyst is formed from

(A) a titanium-containing component having an average particle diameter of 0.01 to 10 micrometers obtained by co-pulverizing a mixture at least comprising (a) 100 parts by weight of a magnesium compound, (b) 1 to 100 parts by weight of a titanium compound and (c) 150 to 2,000 parts by weight of an organic halogen compound, and

(B) 1 to 1,000 gram atoms, per gram-atom of titanium in the titanium complex component (A), of an organoaluminum compound component.

3. A method according to claim 2 wherein per liter of the reaction volume, the proportion of component (A) is 0.0001 to 1.0 milligram-atom calculated as titanium atom, and the proportion of component (B) is 0.01 to 100 milligram-atoms calculated as aluminum atom.

4. A method according to claim 1, 2 or 3 wherein the alpha-olefin is subjected to liquid-phase suspension polymerization.

5. A method according to claim 1, 2 or 3 wherein the alpha-olefin is subjected to dissolution polymerization.

6. A method according to claim 1, 2 or 3 wherein the alpha-olefin is subjected to vapor-phase polymerization.

7. A method according to claim 4 wherein the liquid-phase suspension polymerization is carried out at a temperature of 20 to 130° C under a pressure of 0 to 100 $kg/cm^2$-G.

8. A method according to claim 5 wherein the dissolution polymerization is carried out at a temperature of 50 to 300° C under a pressure of 0 to 100 $kg/cm^2$-G.

9. A method according to claim 6 wherein the vapor-phase polymerization is carried out at a temperature of 20 to 130° C under a pressure of 1 to 100 $kg/cm^2$-G.

10. A method according to any one of the preceding claims wherein the magnesium compound (a) is a halogen-containing magnesium compound, the titanium compound (b) is a tetravalent titanium compound, and the organoaluminum compound (B) is at least one trialkyl aluminum compound.

11. A method according to claim 10 wherein the magnesium compound (a) is a chlorine-containing magnesium compound and the organic halogen compound (c) is 1,2-dichloroethane, chlorobenzene or carbon tetrachloride.

12. A method according to any one of claims 1 to 9 wherein the magnesium compound (a) is a halogen-containing magnesium compound, the titanium compound (b) is a tetraalkoxy titanium compound, and the organoaluminum compound (B) is at least one halogen-containing organoaluminum compound.

13. A method according to claim 12 wherein the magnesium compound (a) is a chlorine-containing

magnesium compound and the organic halogen compound (c) is 1,2-dichloroethane, chlorobenzene or carbon tetrachloride,

14. A method according to any one of claims 1 to 9 wherein the magnesium compound (a) is a chlorine-containing magnesium compound, the titanium compound (b) is titanium trichloride, and the organoaluminum compound (B) is at least one halogen-containing organoaluminum compound, and the titanium containing component (A) further comprises an alkoxy group-containing aluminum compound as an electron donor (e).

15. A method according to any one of the preceding claims wherein the alpha-olefin is ethylene or a mixture of ethylene and at least one alpha-olefin having 3 to 12 carbon atoms.

16. A method according to claim 15 wherein the alpha-olefin is a mixture of ethylene and 4-methylpentene-1.

17. A method according to any one of the preceding claims wherein the component (A) has been obtained by co-pulverizing the mixture at least comprising (a), (b) and (c) and contacting the resulting solid component with (d) a halogen-containing organoaluminum compound.

18. A method according to claim 17 wherein the amount of the halogen-containing organoaluminum compound (d) corresponds to 1 to 1,000 gram-atoms per gram atom of Ti.

19. A method according to claim 17 or 18 wherein the halogen-containing organoaluminum compound (d) is a dialkyl aluminum chloride or a monoalkyl aluminum dichloride.

20. A method according to any one of the preceding claims comprising the additional step of molding into a shaped article the olefin polymer powder resulting from the polymerization or copolymerization.